# EUROPEAN PATENT SPECIFICATION

(11) **EP 1 161 869 B1**
(45) Date of publication and mention of the grant of the patent: **29.06.2005**
(21) Application number: 01900688.1
(22) Date of filing: 12.01.2001
(51) Int. Cl.: A01N 59/16

(54) **ANTIBACTERIAL AND MILDEW-PROOFING AGENTS AND ANTIBACTERIAL AND MILDEW-PROOFING COMPOSITIONS**
ANTIBAKTERIELLE UND SCHIMMELVERHINDERNDE SUBSTANZEN UND ANTIBAKTERIELLE UND SCHIMMELVERHINDERNDE ZUSAMMENSETZUNGEN
AGENTS ANTIBACTERIENS D'IMPUTRESCIBILISATION ET COMPOSITIONS ANTIBACTERIENNES D'IMPUTRESCIBILISATION

(30) Priority: 14.01.2000 JP 2000006889
(43) Date of publication of application: 12.12.2001
(73) Proprietor: Shiseido Co., Ltd., Tokyo 104-8010 (JP)
(72) Inventor: SAKUMA, Kenichi Shiseido Research Center, Yokohama-shi Kanagawa 224-8558 (JP); NISHIHAMA, Shuji Shiseido Research Center, Yokohama-shi Kanagawa 224-8558 (JP); WADA, Masayoshi Shiseido Research Center, Yokohama-shi Kanagawa 224-8558 (JP); GOMYO, Hideyuki Shiseido Research Center, Yokohama-shi Kanagawa 224-8558 (JP)
(74) Representative: Henkel, Feiler & Hänzel
(86) International application number: PCT/JP2001/000113
(87) International publication number: WO 2001/050864

(56) References cited:
- EP-A- 0 791 681
- EP-A2- 0 791 681
- WO-A-94/26244
- GB-A- 1 517 025
- JP-A- 4 093 360
- JP-A- 7 017 803
- JP-A- 7 304 620
- JP-A- 2000 281 518
- US-A- 5 403 506
- DATABASE WPI Week 198601 Derwent Publications Ltd., London, GB; AN 1986-004308 XP002195250 & JP 60 231607 A (KOBAYASHI KOSE KK), 18 November 1985 (1985-11-18)
- DATABASE WPI Week 198706 Derwent Publications Ltd., London, GB; AN 1987-038699 XP002195251 & JP 61 233606 A (RIKAGAKU KENKYUSHO; TOMONO NOYAKU KK), 17 October 1986 (1986-10-17)

## Description

### [TECHNICAL FIELD]

The present invention relates to antibacterial/antifungal agents and antibacterial/antifungal compositions and, in particular, to an improvement of antibacterial/antifungal agents of an inorganic group.

### [BACKGROUND ART]

Currently, various kinds of antibacterial and antifungal agents are used in extremely wide range of fields associated with food, clothing and shelter of the human. These agents are typically divided into organic and inorganic groups.

Organic antibacterial/antifungal agents include paraben, triclosan, quaternary ammonium salt, chlorhexidine hydrochloride, thiabendazole, carbenedazine, captan, fluorofolpet, chlorothalonil, and so on.

On the other hand, inorganic antibacterial/antifungal agents mainly include silicate, phosphate, zeolite, synthetic mineral, and so on, retaining or substituting with antibacterial metals such as in particular silver, copper, and zinc. Among them, for example, silver- or zinc-substituted zeolite, silver-retaining apatite, silver-retaining silica gel, and so on are put to practical use.

Furthermore, recently there are titanium oxide photocatalyst and so on, where the power of ultraviolet radiation contained in the solar light and the fluorescent light is applied to the antibacterial action. These antibacterial/antifungal agents could prevent products from bacterial or fungal infection, contamination, and deterioration by using them in the preparation of construction materials, daily necessities and miscellaneous goods, cosmetic preparations, and so on.

However, organic antibacterial/antifungal agents such as paraben commonly used as antibacterial/antifungal agents have problems in the safety to the human bodies. In other words, these organic antibacterial/antifungal agents are less safer than the inorganic antibacterial/antifungal agents. As the organic antibacterial/antifungal agents are made of organic materials, it has been pointed out that the stability per hour of the organic agents is poor, for example it is denatured by heat and deteriorated by a change in pH. Therefore, there are other problems such as the difficulty in its usage as the restrictions on the use of such an agent become large for the incorporation thereof into the resin at a comparatively high temperature.

In the case of inorganic antibacterial/antifungal agents, on the other hand, they are relatively safety for a human body and hardly affected by heat, chemical agents, and so on. In contrast to the organic antibacterial/antifungal agents, the inorganic ones are poor active against fungi. Furthermore, many of inorganic antibacterial/antifungal agents make a heavy use of silver in its raw material. However, one of the drawbacks of using silver is its high cost. In addition, there is a problem that silver is apt to be discolored, so that an outward appearance of the product tends to be changed.

Furthermore, there is another disadvantage that substantial antibacterial and antifungal activities cannot be expected from the titanium oxide photocatalysis in a dark place.

In addition, such a photocatalysis slowly effects on bacteria and fungi even in a lighted area.

GB-A-1 517 025 discloses a field latex preserved from coagulation by from 0.025% to 0.4% by weight of alkali, and as a secondary preservative a combination of an organic disulphide with zinc oxide or a bactericide.

US-A-5 403 506 discloses deodorant detergent compositions comprising a surfactant, e.g. a soap or synthetic detergent, and as a deodorizing component, a minor amount of zinc oxide having an average particle size no greater than about 10 microns. To enhance its deodorizing effect, the composition optionally may contain a minor amount of sodium bicarbonate (SBC).

In WO-A-94/26244 there is described that submicron zinc oxide particles or agglomerated submicron zinc oxide particles are added to oral care compositions containing sodium bicarbonate such as tooth pastes, tooth gels, tooth powders, mouthwashes, gums, lozenges, chewable tablets or coated onto oral care accessories such as dental floss to inhibit the formation of plaque. The compositions contain a carrier and optionally other conventional ingredients.

### [DISCLOSURE OF INVENTION]

Accordingly, the present invention has been accomplished in view of the above disadvantages in the prior art technology. An object of the invention is to provide an inorganic antibacterial/antifungal agent that have distinguished multiple functions on the whole with respect to antibacterial and antifungal activities, safety, stability, economical efficiency, and so on.

For solving the above disadvantages and attaining the above object, the present inventors have been intent on their studies and finally brought the present invention to completion by finding a novel antibacterial/antifungal agent having excellent antibacterial and antifungal properties. That is, the novel anti bacterial/antifungal agent mainly comprises zinc oxide with one or more selected from the group consisting of alkali metals of lithium, sodium, and potassium hydroxides, hydrogencarbonates, and carbonates. In such an agent, specific antibacterial and antifungal activities of the individual raw materials are active in synergy with each other against bacteria and fungi.

Namely, the antibacterial/antifungal agent according to the present invention includes; zinc oxide as a main component; and
alkali metallic salt one or more selected from the group consisting of lithium, sodium, and potassium hydroxides, hydrogencarbonates, and carbonates, wherein the alkali metallic salt is held in agglomerated fine particles of zinc oxide.

It is also preferable that the content of alkali metallic salt is 0.5 to 75 % by weight of the total of antibacterial/antifungal agent.

It is also preferable that zinc acetate, zinc sulfate, or zinc chloride is used as a synthetic raw material of zinc oxide component.

Also it is preferable that an antibacterial/antifungal agent is prepared by the steps of:
dropping an aqueous solution containing zinc ion and an alkali aqueous solution sequentially into a reaction vessel at an ordinary temperature and pressure while the dropping volumes of the respective aqueous solutions are adjusted so as to keep pH 7 to 9; and
reacting the aqueous solutions in the reaction vessel with each other, followed by subjecting to filtration, washing with water, drying, and baking.

Also it is preferable that 10 % by weight of water dispersion is adjusted to pH 9 to 14.

Also, an antibacterial/antifungal composition according to the present invention includes a said antibacterial/antifungal agent to obtain antibacterial and antifungal activities against bacteria and fungi.

### [BRIEF DESCRIPTION OF THE DRAWINGS]

Fig. 1 is a flow chart showing an example of the method of a synthesis the antibacterial/antifungal agent in the present invention.
Fig. 2 is an explanation diagram that illustrates a method of evaluating the antibacterial and antifungal properties of each sample.
Fig. 3 is a relation figure for explaining the relationship between pH of slurry and the antifungal activity against Penicillium sp., where the slurry is 10 % by weight of powder dispersed in water.
Fig. 4 is an explanation drawing that shows the test sample using as the sample of comparative experiment 5.

### [BEST MODE FOR CARRYING OUT THE INVENTION]

An object of the invention is to provide an antibacterial/antifungal agent that have distinguished multiple functions on the whole with respect to antibacterial and antifungal activities, safety, stability, economical efficiency, and so on.

Furthermore, the antibacterial/antifungal agent of the present invention is prepared without using expensive raw material such as silver or zinc substituted zeolite, so that it is cheap in comparison with the conventional inorganic antibacterial/antifungal agent. Antibacterial and antifungal activities can be expected from the present agent in a dark as opposed to the conventional one. Furthermore, the antibacterial/antifungal agent of the present invention has an advantage that its antibacterial agent alone or its composition including the antibacterial is hardly changed over time as opposed to the conventional one in which such a problem often arises. It is noted that the antibacterial/antifungal agent of the present invention excellently effects on fungi, for example yeast and fungi, which are little affected by the conventional inorganic antibacterial/antifungal agent.

First of all, the process of making of an antibacterial/antifungal agent of this invention is explained.

### The process of making of antibacterial/antifungal agent

In the followings, a general method of preparing an antibacterial/antifungal agent in the present invention is explained.

A salt of zinc used to synthesis zinc oxide as a main component of the antibacterial/antifungal agent of the present invention may be selected from the group of inorganic salts including zinc sulfate, zinc nitrate, zinc phosphate, zinc halide, and so on, and organometallic salts including zinc formate, zinc acetate, zinc propionate, zinc lactate, zinc oxalate, zinc citrate, and so on, but there is a necessity to dissolve in water. Among them, it is preferable to use zinc acetate, zinc sulfate, or zinc chloride, and most preferably to use zinc acetate.

Also, a raw material of alkali aqueous solution may be selected from the group of lithium hydroxide, sodium hydroxide, potassium hydroxide, lithium carbonate, sodium carbonate, potassium carbonate, sodium hydrogencarbonate, potassium hydrogencarbonate, and so on. Especially among them, sodium carbonate or potassium carbonate is preferable.

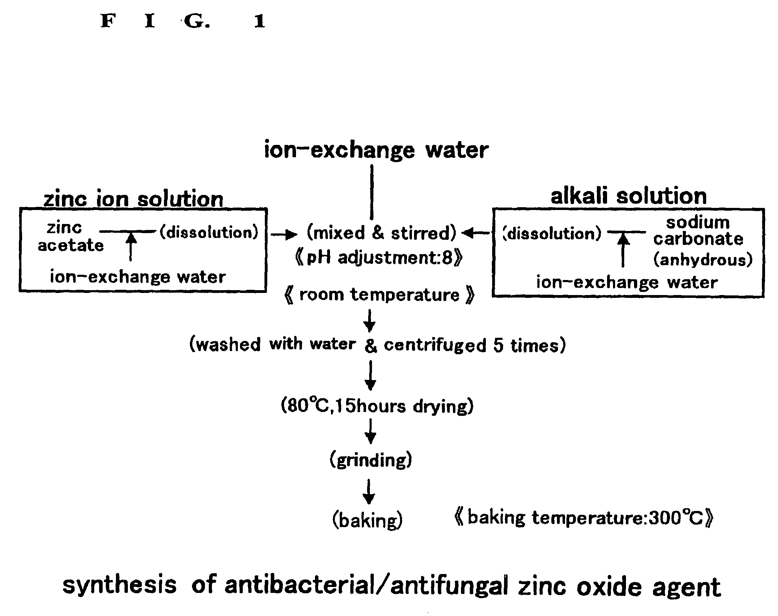

Fig. 1 is a flow chart showing an example of the method of synthesis the antibacterial/antifungal agent in the present invention.

In the figure, zinc acetate is used as a synthetic material of zinc oxide.

In the process of preparing an antibacterial/antifungal agent of the present invention, an aqueous solution containing zinc ion and alkali aqueous solution in which lithium, sodium, and potassium hydroxides, hydrogencarbonate, and carbonate are dissolved are prepared in advance.

In the figure, zinc acetate is dissolved in ion-exchange water to prepare an aqueous solution that contains zinc ion, and also sodium carbonate is dissolved in ion-exchange water to prepare an alkali solution.

These aqueous solutions are supplied to ion-exchange water in a reaction vessel to obtain a reaction mixture while controlling its volume in the reaction mixture to adjust pH thereof to 7 to 9 at room temperature and at normal atmospheric pressure.

The resulting product is subjected to a centrifuge and filtrated to separate it from other fractions and then washed with water and dried, optionally followed by baking. In the manufacturing procedure exemplified in Fig. 1, the product is dried at 80 °C for 15 hours in the drying step and then baked at 300 °C in the baking step. For adjusting grain sizes of fine particles, as shown in Fig. 1, a grinding process or the like may be performed after the drying.

It is to be understood that the present invention is not limited to any particular procedure described above. Rather, the invention is more generally applicable to any method of preparing an antibacterial/antifungal agent in which it is desirable to contain zinc oxide and one or more alkali metallic salt selected from lithium, sodium, and potassium.

As the process of preparing zinc oxide which is the main component of the antibacterial/antifungal agent of the present invention, there are two different procedures One is a wet type method that prepares the desired composition in an aqueous solution and the other is a dry type method that prepares it without directly using an aqueous solution.

The wet type method is one that comprises the steps of mixing an aqueous solution containing zinc ion with an alkali aqueous solution containing carbonate ion to prepare basic zinc carbonate and then performing a series of the steps of washing with water, filtration, drying, and baking on the resulting basic zinc carbonate to obtain zinc oxide.

If the wet type method uses a strong alkali aqueous solution such as of sodium hydrate or potassium hydrate in stead of an alkali solution containing carbonate ion, zinc oxide can be directly prepared without forming basic zinc carbonate as an intermediate. Then, the zinc oxide may be washed, filtrated, and dried to obtain purified zinc oxide as an end product.

On the other hand, the drying type method may be one of a method known as a French method in which metallic zinc is heated in the atmospheric air, a method known as a American method in which zinc ore (flanklinite) is heated with a reducing agent such as mineral coal or coke, and so on.

In the above process of preparing zinc oxide, a method for simply and efficiently obtaining the antibacterial /antifungal agent is that alkali metallic salt being absorbed on fine particles of zinc oxide or basic zinc carbonate dispersed in the reaction solution is intentionally remained by reducing the number of washings with water in the step of washing with water in the wet type method. Such a method is allowed to obtain an antibacterial/antifungal agent in which zinc oxide and alkali metallic salt are uniformly mixed together.

Just as with the method described above, following the process of preparing fine particles of zinc oxide by the drying method or the step of preparing fine particles in which impurities except zinc oxide is substantially absence by sufficiently washing the product with water in the wet method, the fine particles are soaked and precipitated in an aqueous solution that contains an alkali metallic salt and dried to mix the alkali metallic salt evenly in an aggregate of zinc oxide fine particles.

In the antibacterial/antifungal agent of the present invention obtained as described above, it is preferable that a composition ratio between zinc oxide as a main component and alkali metallic salt is represented as 0.5 to 75 % by weight of alkali metal in the composition. If it is less than 0.5 %, the antibacterial/antifungal agent cannot be active against bacteria and fungi. If it is 75 % or over, on the other hand, the antibacterial/antifungal agent shows a good antibacterial activity in early stages, but there are several concerns that a performance degradation of the composition is occurred by rising in moisture absorbency and leaching property of the alkali metallic salt and the ill effects of high degree of alkalinity of the antibacterial/antifungal agent itself on the human body.

The antibacterial/antifungal agent of the present invention may be used as in a form of a fine powder just as it is. Alternatively, it may be properly designed as a combination with one or more additional component if necessary.

Such an additional component to be comprised in the antibacterial/antifungal agent of the present invention is not limited to any particular component, so far as not obstruct the antibacterial/antifungal effects (i.e., original effects of the present invention). The additional component may be selected from, for example, liquid components such as water, alcohol, silicone oil, and so on; resins such as polyethylene, polypropylene, polyester, polyvinyl chloride, polycarbonate, nylon, epoxy resin, acrylate resin, and so on; and inorganic fine particles such as titanium oxide, silica gel, zeolite, apatite, zirconium phosphate, calcium silicate, glass, and so on, if necessary, but not limited to.

The antibacterial/antifungal agent of the present invention can be applied in various kinds of applications. The predetermined amount of such an agent can be uniformly dispersed in the composition to provide antibacterial/antifungal properties, selected from industrial raw materials such as synthetic resin composition, rubber, fiber, paper, coating, and lumber, external preparation for skin, cosmetics, toiletry compositions, and so on, which have been concerned about bacterial and fungal contaminants up to now.

Hereinafter, we will describe the embodiments of the present invention in more detail by means of the examples. It is to be understood that the present invention is not limited to these embodiments.

### Example 1

1.0 g of each of eight different alkali metallic salts (1.LiOH, 2.NaOH, 3.KOH, 4. Li₂CO₃, 5. Na₂CO₃, 6. K₂CO₃, 7. NaHCO₃, 8. KHCO₃) was dissolved in 20 ml of ion-exchange water, so that eight corresponding aqueous solutions were obtained. Then, 9.0 g of zinc oxide powder (manufactured by Seidokagaku Co. Ltd.) was added to each aqueous solution. Subsequently, the mixture was sufficiently stirred and mixed by a homogenizing mixer. The resulting mixture was placed in an oven and dried at 110 °C for 14 hours to obtain an end product.

For distinguishing among the resulting powders, they are referred to as Examples 1-1 to 1-8, respectively, using the numbers, each of which is placed on the head of the name of the corresponding alkali metallic salt added as described above.

The antibacterial/antifungal agent according to the present invention includes; zinc oxide as a main component; and alkali metallic salt one or more selected from the group consisting of lithium, sodium, and potassium hydroxides, hydrogencarbonates, and carbonates. So, the degree of antibacterial/antifungal activities of the antibacterial/antifungal agent prepared by mixing zinc oxide with one of the salts except the above alkali metallic salt or prepared using zinc oxide alone was investigated by manufacturing each of the following comparative examples.

### Comparative Example 1

An aqueous solution was prepared by the same way as that of Example 1, except that 1.0 g of ammonium carbonate (NH₄)₂CO₃ was added in 20 ml of ion-exchange water in stead of adding one of the group of lithium, sodium, and potassium hydroxide, hydrogencarbonate, and carbonate. Subsequently, 9.0 g of zinc oxide powder (Seidokagaku Co. Ltd.) was added to the aqueous solution. Subsequently, the mixture was sufficiently stirred and mixed by a homogenizing mixer. The resulting mixture was placed in an oven and dried at 110 °C for 14 hours to obtain an end product.

### Comparative Example 2

An end product was prepared by the same way just as in the case of Example 1, except that lithium, sodium, and potassium hydroxide, hydrogencarbonate, and carbonate were not added (zinc oxide only).

### Comparative Experiment 1

Each of powder samples obtained in Examples 1-1 to 1-8 and Comparative Examples 1 and 2 was shaped in the disc state of the diameter of 8mm by the process of tablet making using a pharmaceutical tablet-making machine. Then, each disc-shaped tablet was placed on each of culture media on which one of previously cultured bacterial strains of (1) Penicillium sp., (2) Aspergillus niger, (3) Candida albicans: ATCC10231, (4) Pseudomonas aeruginosa:ATCC15442, (5) Escherichia coli:ATCC8739, (6) Stapyhlococcus aureus :FDA209P to be tested was applied. For each of the culture media thus prepared, Penicillium sp., Aspergillus niger, and Candida albicans, belonging to fungi, were cultured at 25 °C for 72 hours. Psudomonas aerunginosa, Escherichia coli, and Staphylococcus aureus, belonging to bacterium, were cultured at 30 °C for 48 hours. A size of growth inhibition zone, which was grown as a result of incubation, was measured to evaluate the antibacterial and antifungal properties of each sample.

The antibacterial and antifungal properties of each sample were evaluated using the following criteria.

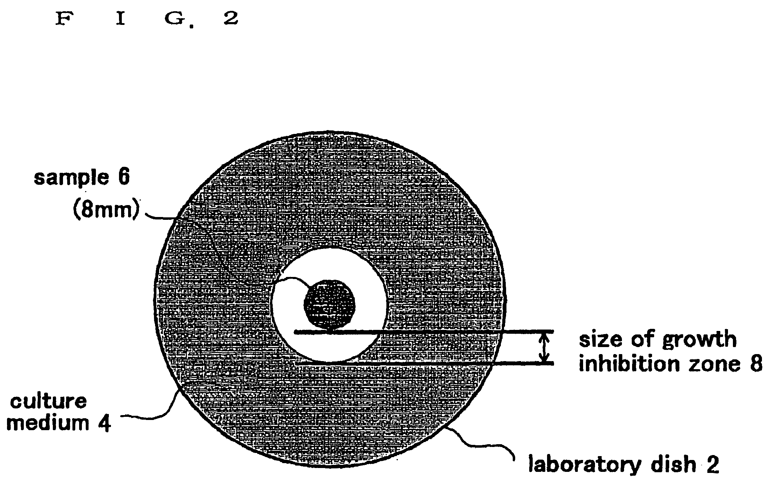

Fig. 2 is an explanation diagram that illustrates a method of evaluating the antibacterial and antifungal properties of each sample. As shown in the figure, a culture medium 4 is prepared in a laboratory dish 2. One of bacteria or fungi strains described above is already applied on the culture medium. The sample 6 in the form of a tablet is placed on a center of the culture medium 4 and then a growing size of growth inhibition zone 8 formed around the sample 6 on the medium 4 is measured at established periods. The antibacterial or antifungal property of each sample is estimated on the basis of the size of growth inhibition zone 8 that corresponds to a distance from the sample 6 to the outer periphery of growth inhibition circle. It can be considered that the antibacterial or antifungal property of each sample becomes excellent in proportion to the growing size of growth inhibition zone 8.

In the present comparative experiments, the antibacterial or antifungal property of each sample was evaluated using the evaluation criteria listed in Table 1 below.

Table 1 shows the evaluation criteria.

**[TABLE 1]**

| evaluation criteria | | |
|---|---|---|
| evaluation | width of growth inhibition zone of fungus | width of growth inhibition zone of bacteria |
| A | 15.0 mm of more | 7.5 mm of more |
| B | 10.0 mm or more less than 15.0 mm | 5.0 mm or more less than 7.5 mm |
| C | 5.0 mm or more less than 10.0 mm | 2.5 mm or more less than 5.0 mm |
| D | less than 5.0 mm | less than 2.5 mm |
| E | 0 mm | 0 mm |

The results of comparative experiment 1 performed in accordance with the evaluation criteria listed in Table 1 are listed in Table 2 below.

**[TABLE 2]**

| salt added to zinc oxide | | (1) | (2) | (3) | (4) | (5) | (6) |
|---|---|---|---|---|---|---|---|
| example 1-1 | LiOH | A | A | A | A | A | A |
| example 1-2 | NaOH | A | A | A | A | A | A |
| example 1-3 | KOH | A | A | A | A | A | A |
| example 1-4 | Li₂CO₃ | A | B | A | B | C | B |
| example 1-5 | Na₂CO₃ | A | A | A | B | A | A |
| example 1-6 | K₂CO₃ | A | A | A | C | C | C |
| example 1-7 | NaHCO₃ | A | A | A | C | D | C |
| example 1-8 | KHCO₃ | A | A | A | C | C | D |
| comparative 1 | (NH₄)₂CO₃ | D | E | D | D | E | E |
| comparative 2 | none | E | D | D | E | D | D |

As is evident from the above results, it has been confirmed that the antibacterial and antifungal properties of Examples 1-1 to 1-8 are higher than those of Comparative Examples 1 and 2. From this fact, the antibacterial and antifungal effects can be improved by mixing zinc oxide with alkali metallic salt. On the other hand, the sufficient antibacterial and antifungal actions cannot be obtained by zinc oxide alone even though zinc oxide has known as an inorganic antibacterial agent.

Furthermore, zinc oxide with the addition of ammonium carbonate does not show a sufficient antibacterial property. So, it have been confirmed that the antibacterial and antifungal property can be improved by containing a mixture of zinc oxide with one or more of alkali metallic salt selected from the group of lithium, sodium, and potassium hydroxides, hydrogencarbonate, and carbonate.

In the following description, we will consider whether the difference in antibacterial and antifungal properties of different samples is observed when each of different zinc compounds is used as a raw material.

### Example 2

200 ml of ion-exchange water was added in a reaction vessel. Then, a stirrer and a pH controller connected with two microtube pumps were mounted on the reaction vessel. Subsequently, one of the microtube pump was connected to a solution prepared by dissolving 87.8 g of zinc acetate dihydrate in 300 ml of ion-exchange water and the other was connected to a solution prepared by dissolving 63.6 g of sodium carbonate anhydrous in 220 ml of ion-exchange water. In addition, these microtube pumps were fixed such that those solutions were dropped into the reaction vessel.

The mixture in the reaction vessel was stirred at room temperature and pressure. During the reaction, the dropping volumes of two aqueous solutions were adjusted, so that pH was constantly kept at 8. A drop time of each solution was about 20 minutes. The resulting precipitate was washed with water and centrifuged and this cycle was repeated five times, followed by drying the precipitate with an oven for 80 °C for 15 hours. The dried sample was grind by a personal mill and then baked at 300 °C for 1 hour. The resulting powder was grind and filtered through 100 mesh filter, obtaining an end product.

### Example 3

An end product was prepared by the same way just as in the case of Example 2, except that 115.0 g of zinc sulfate heptahydrate was used instead of 87.8 g of zinc acetate dihydrate.

### Example 4

An end product was prepared by the same way just as in the case of Example 2, except that 54.5 g of zinc chloride was used instead of 87.8 g of zinc acetate dihydrate.

### Comparative Experiment 2

Each of powder samples obtained in Examples 2 to 4 was shaped in the disc state of the diameter of 8mm by the process of tablet making using a tableting machine. A performance evaluation of the antibacterial and antifungal properties of each sample was done similar to comparative test 1.

An antibacterial agent "Zeomic™" (manufactured by Shinanen Zeomic Co., Ltd.) having a wide antibacterial spectrum was used as Comparative Example 3, and zinc oxide powder (manufactured by Seidokagaku Co., Ltd.) most typically used in the present cosmetics was used as Comparative Example 4. Each of these samples was shaped in the disc state of the diameter of 8 mm in diameter by the process of tablet making using a tableting machine. The resulting tablet was subjected to the experiment under the same conditions as described above.

All of the method of evaluation, evaluation criteria, and so on are similar as all the case of Comparative Example 1.

The results are listed in Table 3 below.

**[TABLE3]**

| | (1) | (2) | (3) | (4) | (5) | (6) |
|---|---|---|---|---|---|---|
| example 2 | A | A | A | B | A | B |
| example 3 | C | D | A | D | D | C |
| example 4 | C | D | B | E | D | C |
| comparative 3 | E | D | D | C | D | C |
| comparative 4 | E | D | D | E | D | D |

As is evident from the above results, it have been confirmed that the powders of Examples 2 to 4 have the antibacterial and antifungal actions against each bacteria or fungi strain to be tested, especially the powder of Example 2 showed excellent properties. We have learned that each of powders of Examples 2 to 4 comprises zinc oxide as a main component and 5 to 10 % by weight of sodium carbonate. This fact is obtained from the results of fluorescent X-ray analysis, X-ray diffraction analysis, and infrared absorption spectrum analysis on the powders of Examples 2 to 4. It is suitable to use zinc acetate, zinc sulfate, zinc chloride as the synthesis material of zinc oxide, especially be suitable to use zinc acetate.

Comparing with the inorganic antibacterial agents commercially available at present, it has been confirmed that the antibacterial/antifungal agent of the present invention have excellent effects on fungi such as Penicillium sp., Aspergillus niger, and Candida albicans.

By comparing with Examples 2 to 4, it has been confirmed that using zinc acetate as a synthetic material for zinc oxide is most preferable. In this case, however, zinc acetate is comparatively expensive for an industrial material of zinc oxide, so that further investigation was performed to prepare powder having the same properties as those of one described above by using any material being priced more moderately.

### Example 5

An end product was prepared by the same way just as in the case of Example 2, except that solution of dissolving 87.8 g of zinc acetate dihydrate in 300 ml of ion-exchange water was used instead of solution of dissolving 54.5 g of zinc chloride and 24.0 g of acetic acid in 300 ml of ion-exchange water.

### Comparative Experiment 3

The powder obtained in Example 5 and the powder obtained in Example 2 were subjected to the comparative experiments by the same experimental method as that of Comparative Experiment 2 with respect to their antibacterial and antifungal properties.
A method of evaluation, evaluation criteria, and so on are similar as all the comparative test 1.

The evaluation result of antibacterial and antifungal performance is shown in the next Table 4.

**[TABLE4]**

| | (1) | (2) | (3) | (4) | (5) | (6) |
|---|---|---|---|---|---|---|
| example 2 | A | A | A | B | A | B |
| example 5 | A | A | A | B | A | B |

In this manner, even though a material which is different from zinc oxide is used as a synthetic material of zinc oxide, it have been confirmed that the powder having the same antibacterial and antifungal properties as those of powder prepared using zinc acetate as a synthetic material can be obtained by adding substantially the same amount of acetic acid as that of one corresponding to acetic acid included in the product obtained by preparing zinc acetate by zinc included in the material.

Next, the variations in antibacterial and antifungal properties of each sample depending on the amount of alkali metal to be mixed with zinc oxide were studied as described below.

### Example 6

0.025 g of Sodium carbonate was dissolved in 20 ml of ion-exchange water, and aqueous solutions were obtained. Then, 9.975 g of zinc oxide powder (manufactured by Seidokagaku Co. Ltd.) was added to the aqueous solution. Subsequently, the mixture was sufficiently stirred and mixed by a homogenizing mixer. The resulting mixture was placed in an oven and dried at 110 °C for 14 hours to obtain an end product. The same method and operation were performed as described above, except that the mixture amount of sodium carbonate and zinc oxide powder (manufactured by Seidokagaku Co., Ltd.) were varied as shown in Table 5 to obtain an end product having the different amount of mixed alkali metal. As described in Table 5, the samples are referred to as Examples 6-1 to 6-14 depending on their mixing quantities.

**[TABLE5]**

| | mixing quantity (g) | | content of sodium carbonate(%) |
|---|---|---|---|
| | zinc oxide | sodium carbonate | |
| example 6-1 | 9.975 | 0.025 | 0.25 |
| example 6-2 | 9.950 | 0.050 | 0.50 |
| example 6-3 | 9.900 | 0.100 | 1.00 |
| example 6-4 | 9.750 | 0.250 | 2.50 |
| example 6-5 | 9.500 | 0.500 | 5.00 |
| example 6-6 | 9.000 | 1.000 | 10.00 |
| example 6-7 | 7.500 | 2.500 | 25.00 |
| example 6-8 | 5.000 | 5.000 | 50.00 |
| example 6-9 | 2.500 | 7.500 | 75.00 |
| example 6-10 | 2.000 | 8.000 | 80.00 |
| example 6-11 | 1.500 | 8.500 | 85.00 |
| example 6-12 | 1.000 | 9.000 | 90.00 |
| example 6-13 | 0.500 | 9.500 | 95.00 |
| example 6-14 | 0.000 | 10.000 | 100.00 |

### Comparative Experiment 4

Each of powder samples obtained in Examples 6-1 to 6-14 and comparative examples 2 (zinc oxide only) used in comparative experiment 1 was shaped in the disc state of the diameter of 8mm by the process of tablet making using a pharmaceutical tablet-making machine. A performance evaluation of the antibacterial and antifungal properties of each sample was done similar to comparative test 1.

A method of interpretation and a standard of the method are similar as all the comparative test 1.

The result is shown in the next Table 6.

**[TABLE 6]**

| | content of sodium carbonate(%) | (1) | (2) | (3) | (4) | (5) | (6) |
|---|---|---|---|---|---|---|---|
| comparative 2 | 0.00 | E | D | D | E | D | D |
| example 6-1 | 0.25 | E | D | D | E | D | D |
| example 6-2 | 0.50 | D | D | C | E | C | D |
| example 6-3 | 1.00 | D | D | B | E | C | D |
| example 6-4 | 2.50 | A | C | A | E | C | D |
| example 6-5 | 5.00 | A | B | A | C | C | C |
| example 6-6 | 10.00 | A | A | A | A | A | A |
| example 6-7 | 25.00 | A | A | A | A | A | A |
| example 6-8 | 50.00 | A | A | A | A | A | A |
| example 6-9 | 75.00 | A | A | A | A | A | A |
| example 6-10 | 80.00 | A | A | A | A | A | A |
| example 6-11 | 85.00 | A | A | A | A | A | A |
| example 6-12 | 90.00 | A | A | A | A | A | A |
| example 6-13 | 95.00 | A | A | A | A | A | A |
| example 6-14 | 100.00 | D | B | A | A | A | A |

As is evident from the results obtained, the improvement in the antibacterial and antifungal properties can be increased if the additional amount of alkali metallic salt in the mixture is 0.5 % or over. The amount of alkali metallic salt in the mixture increases as the antibacterial and antifungal effects increase. However, it is found that 100 % of sodium carbonate decreases the action against fungi.

As is evident from the results, just as in the case with Comparative Example 2 and Example 6-14, the antibacterial and antifungal effects obtained by zinc oxide and alkali metallic salt in combination is considerably higher than that of zinc oxide or alkali metallic salt used alone.

The antibacterial/antifungal agent that comprises alkali metallic salt concentration of over 75 % in the mixture shows a good antibacterial activity in early stages. In this case, however, there are several concerns that a performance degradation of the composition is occurred by rising in moisture absorbency and eluting property of the alkali metallic salt and the ill effects of high degree of alkalinity of the antibacterial/antifungal agent itself on the human body.

In consideration of such results, it have been confirmed that the antibacterial/antifungal agent prepared by simply mixing zinc oxide with alkali metallic salt as powders shows the improvement in antibacterial and antifungal activities. However, it is confirmed that such activities cannot be continued in spite of a good antibacterial activity in early stages because of easily leaching out alkali metallic salt. For sustaining the antibacterial and antifungal activities for a long time, it is preferable that zinc oxide and alkali metallic salt are well mixed to hold the alkali metallic salt in agglomerated fine particles of zinc oxide.

The present inventors have been studied to find the relationship between the physical properties of antibacterial/antifungal agent prepared by containing one of various kinds of alkali metallic salts in zinc oxide and the antibacterial and antifungal activities thereof. It is found that the powder having a high antibacterial activity shows a high alkalinity of pH 9 to 14 when it is dispersed in water so as to be in the form of slurry.

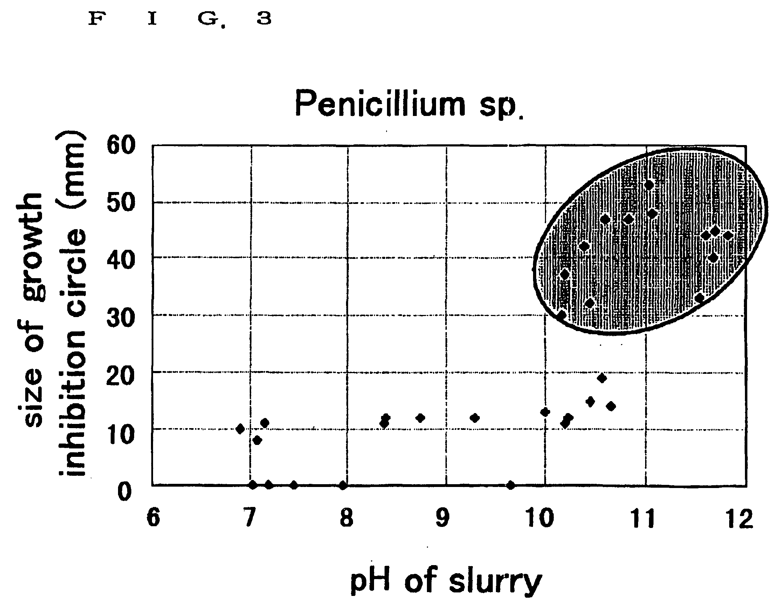

Fig. 3 illustrates the relationship between pH of slurry and the antifungal activity against Penicillium sp., where the slurry is 10 % by weight of powder dispersed in water.

As shown in the figure, the powder having high antifungal activity shows a high alkalinity when it is prepared in the form of slurry.

Therefore, it is confirmed that the antifungal activity against fungi, yeast, or the like can be increased with increase in pH of the slurry of 10 % by weight of powder dispersed in water. It turned out that a synthetic factor for increasing pH of powder slurry has much to do with pH at the step of preparing zinc oxide and alkali metallic salt which are raw materials of the powder. If the pH for preparing an antibacterial/antifungal agent is adjusted to 7 to 9, the tendency has been toward an increase in alkalinity when the resulting powder is provided as slurry.

In the above Comparative Experiments 1 to 4 of the present invention, it have been confirmedthat all of the powders with good antibacterial and antifungal properties shows pH 9 to 14 when each of them is provided as a slurry of 10 % by weight of powder dispersed in water. In the antibacterial/antifungal agent of the present invention, therefore, it is preferable to adjust the pH of 10 % by weight of water dispersion to 9 to 14 for providing the powder with good antibacterial and antifungal activities.

In the following description, we will investigate the antibacterial and antifungal performance of the antibacterial/antifungal composition prepared by containing the antibacterial/antifungal agent of the present invention.

The antibacterial/antifungal agent of the present invention is characterized by its antibacterial and antifungal activities obtained by containing the antibacterial/antifungal agent of the present invention as described above.

Hereinafter, the present invention will be described in more detail by way of an example of antibacterial/antifungal agent of the present invention. However, the present invention is not limited to these embodiments.

### Example 7

An antibacterial coating composition was prepared using the powder obtained in Example 2 on the basis of the blending ratio listed in Table 7. Also, a coating composition of Comparative Example 5 was prepared by replacing the antibacterial/antifungal agent in Example 2 with "Zeomic™" (manufactured by Shinanen Zeomic Co., Ltd.). Furthermore, a coating composition of Comparative Example 6 was prepared in the absence of antibacterial powder.

**[TABLE 7]**

| component | quantity (g) | | |
|---|---|---|---|
| | example 7 | comparative 5 | comparative 6 |
| ion exchange water | 10.0 | 10.0 | 10.0 |
| metylphenylpolysiloxane KF-56™(manufactured by Shin-Etsu chemical industry) | 1.0 | 1.0 | 1.0 |
| dimethylpolysiloxane methyl(polyoxyethylene) siloxane copolymer SC9450N™(manufactured by Shin-Etsu chemical industry) | 1.0 | 1.0 | 1.0 |
| trimethylsiloxysilicic aci decamethylpentasiloxane solution(50wt%) SC9450N™(manufactured by Shin-Etsu chemical industry) | 15.0 | 15.0 | 15.0 |
| powder of example 2 | 1.0 | --- | --- |
| Zeomic™ (manufactured by Shinanen Zeomic). | --- | 1.0 | --- |

### Comparative Example 5

The comparative test was done by using the coating composition obtained with example 7, comparative example 5, 6.

With consideration given to the application to fungicide to be used in a bath room, the performance of the antibacterial agent being fixed on the surface of tile is evaluated as follows.

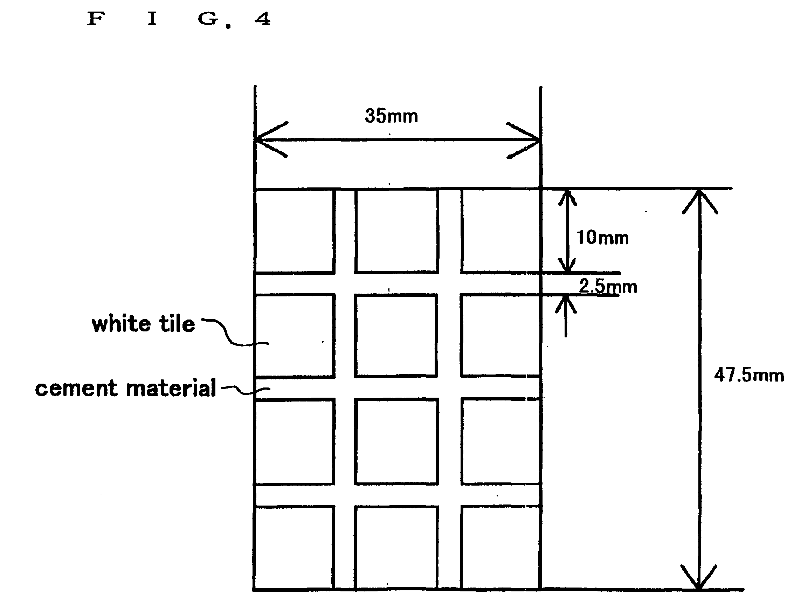

Fig. 4 shows a sample to be tested.

In this figure, twelve commercially available white tiles (each of them was of 10 mm in height, 10 mm in width and 3 mm in thickness) were placed with 2.5 mm spacing between the adjacent titles and fixed with a commercially available tile-bonding cement material which does not include antibacterial agent, so that a set of twelve tiles was provided as a test sample (tile-bonding sample). The test sample was soaked in water for one week to remove alkali content therefrom and then dried. After the drying, three tiles were coated with the coating compositions obtained in Example 7 and Comparative Examples 5 and 6, respectively, and then dried at 80 °C for 15 hours. These three tiles coated with the coating compositions and one tile without any coating were subjected to the tests with respect to their antifungal activities.

The fungi used in the tests were a wild type strain of Cladosporium, which was collected from a bath room and cultured in a culture solution. The culture solution with spores of thede fungi were sprayed on the surface of the sample. Then, the tile-bonding sample was placed in a square laboratory dish and kept at 25 °C. Almost on a weekly basis, the growth of fungi on the sample's surface was observed with the naked eye. Then, the growth condition of fungi was evaluated by the following criteria:
○ : no fungi growth was observed;
Δ : a little amount of fungi growth was observed;
× : a small amount of fungi growth was observed; and
×× : a large amount of fungi growth was observed.

The results of such an observation on the sample's surface were listed in Table 8.

**[TABLE 8]**

| coating composition | one month after | two months after | three months after | four months after |
|---|---|---|---|---|
| example 7 | ○ | ○ | ○ | ○ |
| comparative 5 | ○ | ○ | Δ | Δ |
| comparative 6 | Δ | Δ | × | × |
| none | Δ | Δ | × | × |

The sample without any coating and Comparative Example 6 only applied with the coating composition showed the similar growth conditions of fungi, so that there is no component of inhibiting the growth of fungi in the coating composition itself. Regardless of this fact, no growth of fungi was observed on the test sample of Example 7 for over four months, where the test sample of Example 7 was coated with the antibacterial/antifungal composition that contains the antibacterial/antifungal agent of the present invention. On the other hand, the growth of fungi was inhibited on the sample of Comparative Example 5 for two months. In this case, however, the growth of fungi was slightly recognized after two months from the start. Consequently, it is understood that the antibacterial/antifungal composition that contains the antibacterial/antifungal agent of the present invention has excellent antibacterial and antifungal properties.

In the case of Comparative Example 5 in which "Zeomic™" (manufactured by Shinanen Zeomic Co., Ltd.) was used as an antibacterial/antifungal powder, a design of tile was remarkably damaged as the coating composition turned brown.

From the foregoing, the antibacterial/antifungal agent of the present invention is excellent with respect to resistance to discoloration.

### Comparative Experiment 6

Furthermore, antibacterial and antifungal activities of the antibacterial/antifungal agent of the present invention against fungi under the similar conditions as those of the practical cases were evaluated as follows.

1.0 g of the antibacterial/antifungal agent of Example 2 was added to 99.0g of a silicone bonding agent (Silicone Sealant Cemedine 8060 White™, manufactured by Cemedine Co., Ltd.) and mixed together to obtain a bonding agent of Example 8, The powder of Comparative Example 2, "Zeomic™" (manufactured by Shinanen Zeomic Co., Ltd.), was added to 99.0 g of the above silicone bonding agent and mixed together to obtain a bonding agent of Comparative Example 7, 0.5 g of TBZ("Thiabendazole", manufactured by Wako Pure Chemical Industries, Ltd.) was mixed with 99.5 g of the above silicone bonding agent and mixed together to obtain a bonding agent of comparative Example 8.

Each of the bonding agents was applied flat on a PET film of 1.5 mm. Then, a sample was prepared by drying and fixing the bonding agent on the PET film. Another sample (Comparative Example 9) was also prepared as a blank without the addition of any antibacterial agent. Each of the samples was cut into a square piece of 30 mm in length and 30 mm in width and subjected to an antifungal test. The antifungal test was performed in conformance with Japanese Industrial Standard (JIS) Z 2911-1992 (a testing method for resistance to fungus attack) and another testing method used for general industrial products. The fungal spores of five different strains being cultured were mixed together and splayed on the sample. The growth of fungal thread was observed with the naked eye and also under a microscope.

However, a little 3 % solution of dextrose was added as a nutrient source in a suspension of spores to stimulate the growth of fungal thread. After that, on a weekly basis, the growth condition of fungi on the surface was observed and evaluated by the following criteria:
○ : no fungi growth was observed;
Δ : a little amount of fungi growth was observed;
× : a small amount of fungi growth was observed; and
×× : a large amount of fungi growth was observed.

The results of such an observation on the sample's surface were listed in Table 9

**[TABLE 9]**

| coating composition | one week after | two weeks after | three weeks after | four weeks after |
|---|---|---|---|---|
| example 8 | ○ | ○ | ○ | ○ |
| comparative 7 | ○ | ○ | ○ | ○ |
| comparative 8 | ○ | ○ | ○ | ○ |
| comparative 9 | ○ | ○ | × | × |

From the results of the above experiment, the growth of fungi was observed after only 3 weeks when Comparative Example 9 without mixing with the antibacterial/antifungal agent was used. Regarding Example 8 and Comparative Examples 7 and 8, which were prepared by mixing with the antibacterial/antifungal agent, there was no fungi observed for one month. From these results, it is understood that the performance of the antibacterial/antifungal agent of the present invention is at least equal to that of the existing products when it is under the condition of being mixed with the resin composition.

In the following description, we will confirm a light stability of the powder alone or in combination with a product.

First, a light stability of the powder alone is examined.

### Comparative Experiment 7 (light stability test of the powder alone)

0.5 g of powder sample (the powder obtained in Example 2, or the powder obtained in Comparative Example 3: "Zeomic™" (manufactured by Shinanen Zeomic Co., Ltd.) was dispersed in 20 ml of each dispersion (four types) in a sample bottle made of borosilicate glass. In this condition, the powder in each sample was white.

The dispersions were ion-exchange water, 1 % acetic acid aqueous solution, 1 % sodium chloride aqueous solution, and a 1/10 diluted solution of chlorine fungicide ("Kabi Killer™", manufactured by Johnson, Co., Ltd.) on the market as a potentially useful pharmaceutical product in consideration of the circumstance where the antibacteriallantifungal agent would be used.

Under such a condition, the sample was irradiated with light from a Xenon lamp (illuminance: about 280 W/m²) for 30 hours (accumulated irradiation quantity: about 30 MJ/m²), followed by observing the discoloration of powder with the naked eye to estimate the light stability of the powder alone.

The results are listed in Table 10. The evaluation criteria of the experiment are follows.
○ : no discoloration was observed; and
× : discoloration was observed.

**[TABLE 10]**

| dispersion | ion-exchange water | 1% acetic acid solution | 1% sodium chloride solution | 1/10 diluted solution of clorine fungicide |
|---|---|---|---|---|
| example 2 | ○ | ○ | ○ | ○ |
| comparative 3 | ○ | ○ | × | × |
| | | | (discolored to gray) | (discolored to brown) |

As shown in the results in Fig. 10, it is understood that the antibacterial/antifungal agent of the present invention is extremely stable under any circumference and never discolored. Regarding the powder of Comparative Example 3, on the other hand, the discoloration is occurred in the sodium chloride aqueous solution. Also, it is discolored by a fungicide, so that the variety of the pharmaceutical products to be applied can be restricted to.

In the following description, furthermore, we will examine a sufficient light stability of the antibacterial/antifungal agent of the present invention when it is contained in one of antibacterial/antifungal products.

### Comparative Experiment 8

1.0 g of the antibacterial/antifungal agent of Example 2 was added to 99.0g of a silicone bonding agent (Silicone Sealant Cemedine 8060 White™, manufactured by Cemedine Co., Ltd.) and mixed together to obtain a bonding agent of Example 8, The powder of Comparative Example 2, "Zeomic™" (manufactured by Shinanen Zeomic Co., Ltd.), was added to 99.0 g of the above silicone bonding agent and mixed together to obtain a bonding agent of Comparative Example 7, 0.5 g of TBZ("Thiabendazole", manufactured by Wako Pure Chemical Industries, Ltd.) was mixed with 99.5 g of the above silicone bonding agent and mixed together to obtain a bonding agent of comparative Example 8. Using above samples, the test was done similar to comparative experiment 6.

Each of the bonding agents was applied flat on a PET film of 1.5 mm. Then, a sample was prepared by drying and fixing the bonding agent on the PET film. Another sample (Comparative Example 9) was also prepared as a blank without the addition of any antibacterial agent.

Each of the samples was irradiated with light from a Xenon lamp (illuminance: about 285 W/m²) for 30 hours (accumulated irradiation quantity: about 30 MJ/m²), followed by observing the discoloration of the surface of the sample with the naked eye. Concurrently, a color difference of the sample's surface with respect to before and after the measurement was estimated using a spectrophotometric colorimeter (CM-1000™, manufactured by Minolta Camera Co., Ltd.) to determine the stability thereof. In general, it is believed that the difference in color tone can be recognized with the naked eye when the color difference takes a value of 3 or over.

The results are listed in Table 11 below. The result of visual observation was evaluated by the following criteria:
○ : no yellowing was observed;
Δ : yellowing was slightly observed; and
× : yellowing was clearly observed.

**[TABLE 11]**

| sample | color difference (ΔE) | observation with the naked eye |
|---|---|---|
| example 8 | 2.54 | ○ |
| comparative 7 | 9.67 | × |
| comparative 8 | 4.87 | Δ |
| comparative 9 | 2.51 | ○ |

As shown in Table 11, discoloration was occurred as much as clearly observed with the naked eye in the cases of Comparative Examples 7 and 8. Regarding Comparative Example 9 without containing the antibacterial/antifungal agent, there was no discoloration observed. Thus, it is understood that the discoloration can be generated by the antibacterial/antifungal agent.

Regarding Example 8 mixed with the antibacterial/antifungal agent of the present invention, there was substantially the same degree of discoloration as that of Comparative Example 9 without containing any antibacterial/antifungal agent. It means that the antibacterial/antifungal agent of the present invention was not involved in the discoloration.

As a result, the antibacterial/antifungal agent of the present invention has the light stability superior to the conventional antibacterial/antifungal agent, Comparative Examples 7 and 8.

From the foregoing, the antibacterial/antifungal agent of the present invention has the excellent properties of antibacterial/antifungal actions against Penicillium sp., Aspergillus niger, and Candida albicans, belonging to fungi, which are poorly affected by the conventional inorganic antibacterial agents on the market, stability, persistence of such antibacterial/antifungal actions, resistance to discoloration with time, and so on.

By mixing with the antibacterial/antifungal agent of the present invention, the antibacterial/antifungal properties can be provided on various kinds of industrial raw materials of synthetic resin compositions, rubber, fiber, paper, coating, lumber, and so on, and compositions of external preparations for skin, cosmetics, toiletry goods, and so on. Therefore, the antibacterial/antifungal composition of the present invention has the excellent properties of antibacterial/antifungal actions against Penicillium sp., Aspergillus niger, and Candida albicans, belonging to fungi, which are poorly affected by the conventional inorganic antibacterial agents on the market, stability, persistence of such antibacterial/antifungal actions, resistance to discoloration with time, and so on.

Consequently, the antibacterial/antifungal agent of the present invention permits to provide an antibacterial agent with the antibacterial and antifungal activities and persistence thereof, efficiently and cost effectively, by the comparatively simple method.

The antibacterial/antifungal agent of the present invention permits to provide various kinds of compositions with excellent persistence of antibacterial and antifungal activities and less discoloration with time.

## Claims

1. An antibacterial/antifungal agent comprising:
zinc oxide as a main component; and
alkali metallic salt one or more selected from the group consisting of lithium, sodium and potassium hydroxides, hydrogencarbonates, and carbonates, wherein the alkali metallic salt is held in agglomerated fine particles of zinc oxide.

2. An antibacterial/antifungal agent according to Claim 1, wherein the content of alkali metallic salt is 0.5 to 75 % by weight of the total of antibacterial/antifungal agent.

3. An antibacterial/antifungal agent according to Claim 1, consisting of a product prepared by the steps of:
dropping an aqueous solution containing zinc ion and an alkali aqueous solution sequentially into a reaction vessel at an ordinary temperature and pressure while the dropping volumes of the respective aqueous solutions are adjusted so as to keep pH 7 to 9; and
reacting the aqueous solutions in the reaction vessel with each other, followed by subjecting to filtration, washing with water, drying and baking.

4. An antibacterial/antifungal agent according to Claim 3, wherein an aqueous solution of zinc acetate, zinc sulphate or zinc chloride is used as said aqueous solution containing zinc ion.

5. An antibacterial/antifungal agent according to Claim 1, wherein 10 % by weight of water dispersion is adjusted to pH 9 to 14.

6. An antibacterial/antifungal composition comprising:
an antibacterial/antifungal agent according to Claim 1.

## Patentansprüche

1. Antibakterielles/antimykotisches Mittel, das umfasst:
Zinkoxid als Hauptkomponente und
ein oder mehrere Alkalimetallsalze, die aus der aus Lithium-, Natrium- und Kaliumhydroxiden, -hydrogencarbonaten und -carbonaten bestehenden Gruppe ausgewählt sind, wobei das Alkalimetallsalz in agglomerierten feinen Zinkoxidteilchen gehalten wird.

2. Antibakterielles/antimykotisches Mittel nach Anspruch 1, wobei der Alkalimetallsalzgehalt 0,5 bis 75 Gew.-% des gesamten antibakteriellen/antimykotischen Mittels beträgt.

3. Antibakterielles/antimykotisches Mittel nach Anspruch 1, das aus einem Produkt besteht, das durch die Stufen:
aufeinanderfolgendes Eintropfen einer Zinkionen enthaltenden wässrigen Lösung und einer wässrigen Alkalilösung in ein Reaktionsgefäß bei gewöhnlicher Temperatur und gewöhnlichem Druck, während die Tropfvolumina der jeweiligen wässrigen Lösungen so eingestellt werden, dass ein pH-Wert von 7 bis 9 gehalten wird; und
Umsetzen der wässrigen Lösungen in dem Reaktionsgefäß miteinander und anschließendes Durchführen einer Filtration, Waschen mit Wasser, Trocknen und Backen hergestellt wurde.

4. Antibakterielles/antimykotisches Mittel nach Anspruch 3, wobei eine wässrige Lösung von Zinkacetat, Zinksulfat oder Zinkchlorid als die Zinkionen enthaltende wässrige Lösung verwendet wird.

5. Antibakterielles/antimykotisches Mittel nach Anspruch 1, wobei eine 10 gew.-%ige wässrige Dispersion auf einen pH-Wert von 9 bis 14 eingestellt ist.

6. Antibakterielle/antimykotische Zusammensetzung, die ein antibakterielles/antimykotisches Mittel nach Anspruch 1 umfasst.

## Revendications

1. Agent antibactérien/antifongique comprenant :
de l'oxyde de zinc en tant que constituant principal ; et
un ou plusieurs sels métalliques alcalins choisis dans le groupe constitué par les hydroxydes, les hydrogénocarbonates et les carbonates de lithium, de sodium et de potassium, dans lequel le sel métallique alcalin est maintenu en particules d'oxyde de zinc fines agglomérées.

2. Agent antibactérien/antifongique selon la revendication 1, dans lequel la teneur en sel métallique alcalin est de 0,5 à 75% en poids de la totalité de l'agent antibactérien/antifongique.

3. Agent antibactérien/antifongique selon la revendication 1, consistant en un produit préparé par les étapes consistant :
à introduire une solution aqueuse contenant un ion zinc et une solution aqueuse alcaline successivement dans un réacteur à température et pression ordinaires tout en ajustant les volumes d'introduction des solutions aqueuses respectives de façon à maintenir un pH 7 à 9 ; et
à faire réagir les solutions aqueuses entre elles dans le réacteur, puis soumettre à une filtration, un lavage avec de l'eau, un séchage et une cuisson.

4. Agent antibactérien/antifongique selon la revendication 3, dans lequel une solution aqueuse d'acétate de zinc, de sulfate de zinc ou de chlorure de zinc est utilisée en tant que ladite solution aqueuse contenant un ion zinc.

5. Agent antibactérien/antifongique selon la revendication 1, dans lequel 10% en poids de la dispersion d'eau est réglée à pH 9 à 14.

6. Composition antibactérienne/antifongique comprenant : un agent antibactérien/antifongique selon la revendication 1.
